# EUROPEAN PATENT SPECIFICATION

(11) **EP 3 387 899 B1**
(45) Date of publication and mention of the grant of the patent: **10.04.2019**
(21) Application number: 18165024.3
(22) Date of filing: 29.03.2018
(51) Int. Cl.: A01J 27/00, A01J 27/02, A23P 20/18, A23G 3/34, A22C 17/10, A23P 20/25

(54) **PROCESS FOR MARKING A FOOD PRODUCT AND HARD CHEESE'S WHEEL**
VERFAHREN ZUR MARKIERUNG EINES LEBENSMITTELPRODUKTES, INSBESONDERE EINES HARTKÄSELAIBES
PROCEDE POUR LE MARQUAGE D'UN PRODUIT ALIMENTAIRE, NOTAMMENT D'UNE MEULE DE FROMAGE

(30) Priority: 12.04.2017 IT 201700040962
(43) Date of publication of application: 17.10.2018
(73) Proprietor: Cantarelli S.p.A., 43123 Parma (IT)
(72) Inventor: CANTARELLI, Roberto, 43123 PARMA (IT)
(74) Representative: Dondi, Silvia

(56) References cited:
- EP-A1- 0 871 153
- CA-A- 383 949
- FR-A1- 2 717 939
- JP-A- 2001 161 285
- US-A1- 2004 180 120

## Description

The present invention relates to a process for marking a hard cheese.

Surface marking of food products has the aim of guaranteeing complete traceability of the product, thus protecting the consumer from any fraudulent practice over the origin of the product.

For example, for ripened cheeses, traceability is guaranteed only in the ripening store and does not extend to the subsequent steps of working and/or movement of the wheels.

For example, patent FR2621529 describes a marking process using laser technology in which the marking consists in making the code using the laser beam directly onto the surface of the product, which is then permanently modified.

In ripened cheeses, traditional marking includes application on the surface of the fresh cheese, i.e. not yet ripened, of a casein label bearing the marking code. The label is then partially embedded in the cheese, as disclosed in FR 2717939 and EP 0871153.

In this context, the expression "ripened cheeses" is taken in particular to mean medium or slow maturing cheeses, i.e. characterised by a ripening time that is longer than about six months, such as for example Parmesan or grana cheeses.

As is known, these cheeses are produced in a cylindrical shape having a slightly convex or almost straight side with faces or bases that are flat (in the sector known as flat top), slightly edged.

During the ripening process, the external part of the wheel dries, causing the formation of a natural crust. The casein label applied on the fresh cheese, however, tends to deform during ripening, with a consequent deformation of the code thereon and a difficulty in reading.

Further, the casein label can be applied at different positions on the wheel, either on the flat tops or the side, making automated management in a wheel store in reality impossible.

In this context, the technical task underlying the present invention is to provide a process for marking a food product and a hard cheese's wheel which obviates the drawbacks in the prior art as described above.

In particular, an aim of the present invention is to make available a process for marking a food product that is reliable, i.e. that ensures traceability over time of the product.

A further aim of the present invention is to make available a process for marking a food product that enables the product to be traceable easily and rapidly in an automated store.

A further aim of the present invention is to provide a hard cheese's wheel having a durable marking, i.e. resistant also to successive work operations to which the wheel is subjected, and which is easily readable.

A further aim of the present invention is to provide a hard cheese's wheel that is easily and rapidly traceable.

The specified technical task and the specified aims are substantially achieved by a process for marking a hard cheese having a crust, comprising steps of:
- at least partially removing (scraping) the crust of the food product from a predefined surface area;
- after having scraped the crust, applying a marking code in the predefined surface area,
characterised in that it comprises a step of applying a layer of transparent material on the predefined surface area after having applied the marking code.

In an embodiment, the step of applying the layer of transparent material consists in laying down a film of the transparent material on the predefined surface area.

In a further embodiment, the step of applying the layer of transparent material consists in spraying the transparent material on the predefined surface area.

In an embodiment, the transparent material consists of a vinyl acetate-based mix.

In an embodiment, the transparent material consists of a cornstarch-based mix.

In an embodiment, the transparent material comprises carboxymethylcellulose.

In an embodiment, the transparent material consists of an aqueous emulsion based on polyvinylpyrrolidone, dextrose, cellulose and vegetable oils.

In an embodiment, the step of applying the marking code is obtained by inkjet printing carried out in the predefined surface area.

For example, an edible ink can be used.

The edible ink is preferably based on thermoplastic resin and wax.

In an embodiment, the step of applying the marking code is carried out by gluing a casein label bearing said marking code on the predefined surface area, which area has been previously scraped.

The stated technical task and specified objects permit to obtain a hard cheese's wheel comprising:
- a marking code in at least a predefined surface area previously scraped free of the crust of said wheel;
- a layer of transparent material applied on the marking code in order to preserve it.

According to an embodiment, the hard cheese's wheel further comprises a casein label bearing the marking code.

In an embodiment, the marking code is obtained by inkjet printing.

In an embodiment, the hard cheese's wheel comprises:
- a plurality of marking codes in a same number of predefined surface areas previously scraped free of the crust of the wheel;
- layers of transparent material applied on the marking codes.

The predefined surface areas are preferably on a side of the wheel. Alternatively (or in combination), the predefined surface areas are on a flat top of the wheel.

Further characteristics and advantages of the present invention will become more apparent from the indicative and thus non-limiting description of a preferred, but not exclusive, embodiment of a process for marking a hard cheese, as illustrated in the accompanying drawings, in which:

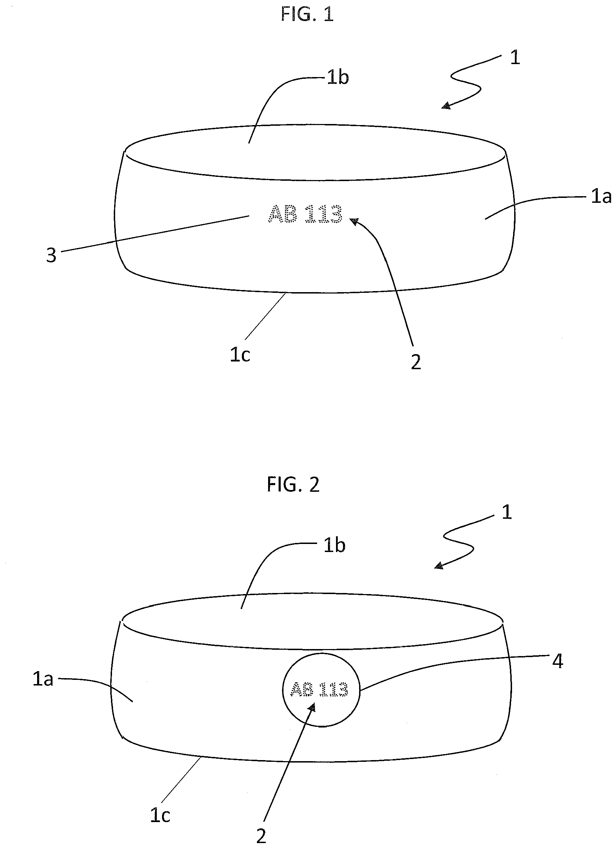

- figure 1 illustrates a hard cheese's wheel according to the present invention in a first embodiment, in a perspective view;
- figure 2 illustrates the hard cheese's wheel, according to a second embodiment, in a perspective view.

The process for marking a food product 1 comprises at least following steps:
- applying a marking code 2 in at least a predefined surface area 3 of the food product 1;
- applying a layer of transparent material on the predefined surface area 3 after having applied the marking code 2.

For example, the marking code 2 is an alphanumeric code or a bar code or a Data Matrix.

Other types of codes of known type can also be used.

For example, the transparent material applied on the predefined surface area 3 is suitable for food grade, i.e. suitable for contact with foods.

It is also envisaged the use of an edible transparent material, such as for example an aqueous emulsion based on polyvinylpyrrolidone (E1201), dextrose, cellulose and vegetable oils.

According to an embodiment, the layer of transparent material is laid down on the predefined surface area 3 in the form of a film or surface layer.

In a further embodiment, the transparent material is sprayed on the predefined surface area 3 in such a way as to form the layer.

For example, the transparent material consists of a vinyl acetate-based mix.

Alternatively, it is envisaged the use of mixtures based on vegetable compounds, such as for example corn-starch or carboxymethylcellulose (indicated with code E466).

A variant embodiment includes the use of a transparent material comprising a mix of casein.

The food product 1 is a hard cheese's wheel, such as for example Parmesan cheese or grana cheese.

The wheel 1 is substantially cylindrical having a side (i.e. a lateral surface) 1a that is slightly convex and has two faces or bases 1b, 1c that are substantially flat.

The predefined surface area 3 of the wheel 1 can be on one of the flat tops 1b, 1c or on the side 1a.

In a preferred embodiment, the marking code 2 is applied in a plurality of predefined surface areas 3, which areas have been previously scraped.

For example, the predefined surface areas 3 can all be on one of the flat tops 1b, 1c or on the side 1a. In the last case, the predefined surface areas 3 lie on an imaginary surface strip extending circumferentially to the side 1a. In this way the possibility of accessing the marking codes 2 is ensured, independently of the position of the wheel 1.

It is further possible to apply the marking code 2 in two predefined surface areas 3, for example one on the side 1a and one on a flat top 1b, 1c of the wheel 1. The purpose of the double marking is the redundancy of the information.

In a first embodiment of the marking process applied to the wheel 1, before applying the marking code 2 the crust is scraped free of the predefined surface area 3, i.e. to at least partially remove the crust from the predefined surface area 3.

Following the scraping, the predefined surface area 3 is ready for the application of the marking code 2, which is applied using inkjet printing suitable for food grade. For example, an ink suitable for food grade is used, i.e. suitable for contact with foods.

It is also envisaged the use of an edible ink formed by edible components. For example, the ink is based on ethanol with food additives. The ink is alternatively edible and is based on thermoplastic resin and wax.

The scraping of the crust in the predefined surface area 3 must have as a result the attaining of a compact, non-porous and non-dusty surface. For this reason, use of a blade is preferred.

Further, the scraping also has a "whitening" effect, which improves contrast so that the code can be more easily read.

Obviously, the scraping also has the function of removing any dirt present on the predefined surface area 3.

The choice of ink colour is dictated by the need to achieve a good contrast with respect to the colour of the food product 1 (in this case the cheese's wheel) so as to facilitate the subsequent automated reading, for example using a camera or another code reader (e.g. barcode reader, or a smartphone or tablet).

The ink is applied in quantities that do not place food safety at risk.

The inkjet printing technology is of known type, and since it is not an object of the present invention will not be further described herein.

In this first embodiment, the layer of transparent material is applied directly on the inkjet-printed code. In this way, the code is protected and at the same time easily readable (the layer is in fact transparent).

The layer of transparent material is preferably sprayed on the marking code 2.

Any work operations on the wheel 1, such as cleaning or brushing, affect neither the transparent layer nor the code, the legibility of which remains intact.

In a second embodiment of the marking process, applied to the wheel 1, the application of the marking code 2 is carried out by applying a casein label 4 bearing the marking code 2 on the predefined surface area 3. In particular, la casein label 4 is glued on the surface area 3 by means of an adhesive.

Before applying the casein label 4 the crust is scraped free of the predefined surface area 3, i.e. to at least partially remove the crust from the predefined surface area 3.

In this second embodiment, the layer of transparent material is applied on the casein label 4 bearing the code.

In this case, the transparent material can be adhesive, and therefore also has the function of a glue for the casein label 4.

For example, the application can be done by spraying or other methods, for example using a brush or pad.

In this case too, the layer of transparent material protects the label 4 and the marking code 2 from cleaning and/or brushing cycles.

From the description the characteristics of the process for marking a hard cheese according to the present invention are clear, as are the advantages.

In particular, the application of the layer of transparent material on the marking code serves to protect the code during successive work operations that the food product undergoes (for example, brushing or cleaning cycles, in the case of a cheese wheel), thus producing a reliable and durable marking. In practice, a marked food product is obtained having high mechanical resistance to schedules maintenance operations, which tend to remove the simple labels applied in relief on the product (as in the prior art).

Further, the transparent layer increases the visibility of the label, i.e. the contrast of the underlying marking code, enabling improvement of the code legibility in an automated store. The application of the transparent layer also performs a contrast action to oxidation of the previously-whitened part.

Further, in the case of a cheese, the transparent layer applied does not influence the correct ripening of the wheel and might be easily eliminated following the exit of the wheel from the automated store, in fact restoring an "intact" product, which does not happen with the use of lasers.

The application of the transparent layer by spraying or atomising enables a saving of material and rapid drying.

In other cases, application with a brush or pad might be preferable to facilitate adhesion of the casein label.

In the embodiments using edible ink and edible transparent layer, the process can be applied on cheeses having an edible crust (e.g. Parmesan cheese, grana), for which the marking need not be removed before putting the product up for sale.

The scraping of the wheel has the purpose of allowing better application quality of the marking code and the layer of transparent material, and also contributes to the visibility of the marking.

## Claims

1. Process for marking a hard cheese (1) having a crust, comprising the steps of:
at least partially removing the crust of said hard cheese (1) from a predefined surface area (3) so as to obtain a compact, non-porous and non-dusty surface;
after having removed said crust from the predefined surface area (3),
applying a marking code (2) on said predefined surface area (3),
applying a layer of transparent material on said predefined surface area (3) after having applied the marking code (2).

2. Process according to claim 1, wherein said step of applying the layer of transparent material consists in laying down a film of said transparent material on the predefined surface area (3).

3. Process according to claim 1, wherein said step of applying the layer of transparent material consists in spraying said transparent material on the predefined surface area (3).

4. Process according to any one of the preceding claims, wherein said transparent material consists in a vinyl acetate-based or cornstarch-based mix.

5. Process according to claims 1 to 4, wherein said transparent material comprises carboxymethylcellulose.

6. Process according to claims 1 to 4, wherein said transparent material consists of an aqueous emulsion based on polyvinylpyrrolidone, dextrose, cellulose and vegetable oils.

7. Process according to any one of claims 1 to 6, wherein the step of applying the marking code (2) is obtained by inkjet printing that is carried out in the predefined surface area (3).

8. Process according to claim 7, wherein said ink is edible.

9. Process according to claim 8, wherein said ink is based on thermoplastic resin and wax.

10. Process according to any one of claims 1 to 6, wherein the step of applying the marking code (2) is obtained by gluing a casein label (4) bearing said marking code (2) on said predefined surface area (3), which area has been previously removed.

## Patentansprüche

1. Verfahren zum Markieren eines Hartkäses (1) mit einer Kruste, umfassend die Schritte zum:
zumindest teilweise Entfernen der Kruste des Hartkäses (1) von einem vordefinierten Oberflächenbereich (3), um eine kompakte, porenfreie und staubfreie Oberfläche zu erhalten;
nach dem Entfernen der Kruste von dem vordefinierten Oberflächenbereich (3), Aufbringen eines Markierungscodes (2) auf den vordefinierten Oberflächenbereich (3),
Aufbringen einer Schicht aus transparentem Material auf den vordefinierten Oberflächenbereich (3), nachdem der Markierungscode (2) aufgebracht wurde.

2. Verfahren nach Anspruch 1, wobei der Schritt zum Aufbringen der Schicht aus transparentem Material darin besteht, einen Film aus dem transparenten Material auf den vordefinierten Oberflächenbereich (3) aufzubringen.

3. Verfahren nach Anspruch 1, wobei der Schritt zum Aufbringen der Schicht aus transparentem Material darin besteht, das transparente Material auf den vordefinierten Oberflächenbereich (3) zu sprühen.

4. Verfahren nach einem der vorhergehenden Ansprüche, wobei das transparente Material aus einer Mischung auf Vinylacetat- oder Maisstärkebasis besteht.

5. Verfahren nach den Ansprüchen 1 bis 4, wobei das transparente Material Carboxymethylcellulose umfasst.

6. Verfahren nach den Ansprüchen 1 bis 4, wobei das transparente Material aus einer wässrigen Emulsion auf Basis von Polyvinylpyrrolidon, Dextrose, Cellulose und Pflanzenölen besteht.

7. Verfahren nach einem der Ansprüche 1 bis 6, wobei der Schritt zum Aufbringen des Markierungscodes (2) durch Tintenstrahldrucken erhalten wird, der in dem vordefinierten Oberflächenbereich (3) durchgeführt wird.

8. Verfahren nach Anspruch 7, wobei die Tinte essbar ist.

9. Verfahren nach Anspruch 8, wobei die Tinte auf thermoplastischem Harz und Wachs basiert.

10. Verfahren nach einem der Ansprüche 1 bis 6, wobei der Schritt zum Aufbringen des Markierungscodes (2) durch Aufkleben eines Kaseinetiketts (4), das den Markierungscode (2) trägt, auf den vordefinierten Oberflächenbereich (3) erhalten wird, wobei dieser Bereich zuvor entfernt wurde.

## Revendications

1. Procédé de marquage d'un fromage à pâte dure (1) à croûte, comprenant les étapes de :
retirer au moins partiellement la croute dudit fromage à pâte dure (1) d'une surface (3) prédéfinie de sorte à obtenir une surface compacte, non poreuse et non poussiéreuse ;
après avoir retiré ladite croute de la surface (3) prédéfinie, appliquer un code de marquage (2) sur ladite surface (3) prédéfinie,
appliquer une couche de matière transparente sur ladite surface (3) prédéfinie après avoir appliqué le code de marquage (2).

2. Procédé selon la revendication 1, dans lequel l'étape consistant à appliquer la couche de matière transparente consiste à apposer un film de ladite matière transparente sur la surface (3) prédéfinie.

3. Procédé selon la revendication 1, dans lequel l'étape consistant à appliquer la couche de matière transparente consiste à pulvériser ladite matière transparente sur la surface (3) prédéfinie.

4. Procédé selon l'une quelconque des revendications précédentes, dans lequel ladite matière transparente consiste en un mélange à base d'acétate de vinyle ou d'amidon de maïs.

5. Procédé selon les revendications 1 à 4, dans lequel ladite matière transparente comprend de la carboxyméthylcellulose.

6. Procédé selon les revendications 1 à 4, dans lequel ladite matière transparente consiste en une émulsion aqueuse à base de polyvinylpyrrolidone, de dextrose, de cellulose et d'huiles végétales.

7. Procédé selon l'une quelconque des revendications de 1 à 6, dans lequel l'étape consistant à appliquer le code de marquage (2) est obtenue par une impression au jet d'encre étant réalisée sur la surface (3) prédéfinie.

8. Procédé selon la revendication 7, dans lequel ladite encre est comestible.

9. Procédé selon la revendication 8, dans lequel ladite encre est à base de résine thermoplastique et de cire.

10. Procédé selon l'une quelconque des revendications de 1 à 6, dans lequel l'étape consistant à appliquer le code de marquage (2) est obtenue en collant une plaque de caséine (4) comportant ledit code de marquage (2) sur ladite surface (3) prédéfinie, ladite zone ayant été retirée préalablement.
